# EUROPEAN PATENT APPLICATION

(11) **EP 3 459 350 A1**
(43) Date of publication of application: **27.03.2019**
(21) Application number: 16908652.7
(22) Date of filing: 18.10.2016
(51) Int. Cl.: A01M 3/02, A01M 1/22

(54) **BATTERY-FREE ELECTRIC MOSQUITO SWATTER**

(30) Priority: 12.07.2016 CN 201620725421 U
(71) Applicant: Fujian Nashida Electronic Incorporated Company, Fuzhou, Fujian 350119 (CN)
(72) Inventor: LIN, Cuiwen, Fuzhou Fujian 350119 (CN); CHEN, Jiangqun, Fuzhou Fujian 350119 (CN); LIN, Zhou, Fuzhou Fujian 350119 (CN); ZHENG, Huiyang, Fuzhou Fujian 350119 (CN); YANG, Xiujin, Fuzhou Fujian 350119 (CN)
(74) Representative: Inal, Aysegul Seda
(86) International application number: PCT/CN2016/102297
(87) International publication number: WO 2018/010328

(57) **Abstract**

The present invention relates to an electric mosquito swatter without a battery, comprising a face, a handle, a control circuit board and a mechanical power generating device, wherein the face which is composed of a frame and a web is connected to the handle, the control circuit board and the mechanical power generating device are provided in the handle, the web and the mechanical power generating device are both electrically connected with the control circuit board; the mechanical power generating device comprises a gripping handle, a gear shifting mechanism and a power generator, wherein the gripping handle is provided with a curved rack, which is engaged with the input gear of the gear shifting mechanism, and the output gear of the gear shifting mechanism drives the rotating shaft of the rotor of the generator to rotate, wherein the generator is electrically connected with the control circuit board; the handle is provided with a discharge button switch which is used for shortening the leads of the positive and negative electrodes of the web. In the present utility model, no battery or mains charging is required, , the use costs and the pollution of the used battery are reduced, the overall design is reasonable and reliable, and the use is safe and long-lived; the invention with low costs has a simple assembly, which is ready and easy to use.

## Description

### Field of the Invention

The present invention relates to an electric mosquito swatter without a battery, and in particular to an electric mosquito swatter which generates electricity by mechanical power.

### Background of the Invention

After twenty-two years of development, electric mosquito swatters have become very popular. In almost every household in China, there are one or two electric mosquito swatters. The annual output is about 100 million (including exports). An electric mosquito swatter in the prior art uses a rechargeable battery or a disposable battery, with a service life of the electric mosquito swatter of 2∼3 years generally. It is a low-value consumable product, so when it is damaged, it is thrown away directly as garbage. The charging frequency of this rechargeable battery is limited. In addition, in order to reduce costs, most of the rechargeable electric mosquito swatters on the market use cheap lead-acid batteries, whether the used rechargeable batteries or the disposable batteries, which cause serious pollution to the environment due to a huge amount. Secondly, an electric mosquito swatter which uses a battery often encounters an embarrassing situation that the battery is dead when it is necessary to be used to fight the mosquitoes; furthermore, it is not suitable for people who work in a remote mountainous area or a field where an electric supply or a battery is not available to use an electric mosquito swatter in the prior art. Before the present patent application, there were several application documents related to an electric mosquito swatter without a battery, such as Patent No. 200920043880.5 titled "Green Electric Mosquito Swatter"; however, the patent has no specific structure, so it is difficult to be put into practice, and it is very difficult to design a high-variation and high-intensity shifting mechanism in the handle within a very small space, because it requires creative labor. Another example is Patent No. 201220348142.3 titled "A Split-type Electric Mosquito Swatter Without A Battery", which requires tens of seconds to several minutes to charge a super capacitor so as to start using an electric mosquito swatter; however, this technology lacks practicability, because people find that mosquitoes need to be beat immediately and they will fly to anywhere after tens of seconds to several minutes.

### Summary of the Invention

In order to overcome the above disadvantages of the prior art, the purpose of the present invention is to provide an electric mosquito swatter without a battery.

The technical solution of the present invention is an electric mosquito swatter without a battery, comprising a face, a handle, a control circuit board and a mechanical power generating device, wherein the face which is composed of a frame and a web that is connected to the handle, the control circuit board with a high-voltage capacitor and the mechanical power generating device are provided in the handle, the web and the mechanical power generating device are both electrically connected with the control circuit board; the mechanical power generating device comprises a gripping handle, a gear shifting mechanism and a power generator, wherein the gripping handle is provided with a curved rack which is engaged with the input gear of the gear shifting mechanism, and the output gear of the gear shifting mechanism drives the rotating shaft of the rotor of the generator to rotate, wherein the generator is electrically connected with the control circuit board.

Furthermore, the gear shifting mechanism is composed of double gear I, gear II, gear III, double gear IV and output gear V, which are sequentially connected for transmission; the double gear I and the double gear IV both comprise a small gear and a large gear, wherein the small gear of double gear I, which is used as an input gear and engaged with the curved rack on the gripping handle, the large gear of double gear I is engaged with gear II for transmission, the gear II and the gear III, which are coaxial and connected by a ratchet pawl one-way transmission, the small gear of double gear IV is engaged with the gear III for transmission, the large gear of double gear IV is engaged with output gear V for transmission, wherein the output gear V is fixed on the rotating shaft of the rotor of the generator.

Furthermore, the handle comprises an upper handle cover and a lower handle cover which are mutually engaged, with one end of the gripping handle hinged with the handle via a rotating shaft of the gripping handle, wherein the handle shaft is provided with rotating shaft I, rotating shaft II and rotating shaft III, the double gear I is provided on rotating shaft I, the gear II and the gear III are provided on rotating shaft II, the double gear IV is provided on rotating shaft III, and the inner sides of the upper handle cover and the lower handle cover are provided with cylindrical holes used for fixing the rotating shaft of the gripping handle, rotating shaft I, rotating shaft II and rotating shaft III.

Furthermore, an inner side of the lower handle cover is provided with a curved boss which is used for mounting the power generator, and the upper portion of the power generator is provided with pressing panel of the power generator, with the pressing panel of the power generator connected with the lower handle cover via a bolt.

Furthermore, the handle is provided with a discharge button switch which is used for shortening the leads of the positive and negative electrodes of the web.

Furthermore, the discharge button switch which is composed of a button, a spring, a fixing panel of the button and a discharge metal piece, is mounted on the upper handle cover, wherein a lower portion of the button is provided with a cylinder, and the fixing panel of the button which is provided with a through hole to facilitate the cylinder passing through, is fixed in the upper handle cover, the spring is sleeved on the cylinder and located between the button and the fixing panel of the button,, and the discharge metal piece is fixed at the bottom of the cylinder.

Furthermore, the number of teeth of the small gear of double gear I is 10 and the number of teeth of the large gear of the double gear I is 40 (modulus (m)=0.7), the number of teeth of the gear II is 11 (m=0.7), the number of teeth of the gear III is 47 (m=0.6), the number of teeth of the small gear of the double gear IV is 10 (m=0.6), the number of teeth of the large gear of the double gear IV is 56 (m=0.5), and the number of teeth of the output gear V is 11 (m=0.5); the gear shifting mechanism has a shifting ratio of 87 times.

Furthermore, the end of the gripping handle which is provided with the rotating shaft of the gripping handle is opened with a groove where a torsion spring is provided.

Compared with the prior art, the present invention has the following beneficial effects: no battery or mains charging is required, the use costs and the pollution of the used battery are reduced, the overall design is reasonable and reliable, and the use is safe and long-lived; the invention with low costs has a simple assembly, which is ready and easy to use.

The present invention will be further described in detail below in conjunction with the drawings and specific embodiments.

### Brief Description of the Drawings

FIG. 1 is a structural view of an external structure of the present invention;
FIG. 2 is an explosive view of the specific structure of the present invention;
FIG. 3 is a schematic view of the internal structure of the present invention;
FIG. 4 is a schematic view of the structure of the gripping handle;
FIG. 5 is a schematic view of the upper structure of the mechanical power generating device;
FIG. 6 is a schematic view of the lower structure of the mechanical power generating device;
FIG. 7 is a schematic view of the structure of the upper handle cover;
FIG. 8 is a schematic view of the structure of the lower handle cover;
FIG. 9 is a schematic view of the internal structure of the handle;
FIG. 10 is a schematic view of the structure of the discharge button switch;
FIG. 11 is an explosive view of the structure of the discharge button switch;

In the figure: 1-face, 11-positive electrode lead of the face, 12-negative electrode lead of the face, 2-handle, 21-upper handle cover, 211-cylindrical hole inside the upper handle cover used for fixing the rotating shaft of the gripping handle, 212-cylindrical hole inside the upper handle cover used for fixing rotating shaft I, 213-cylindrical hole inside the upper handle cover used for fixing rotating shaft II, 214-cylindrical hole inside the upper handle cover used for fixing rotating shaft III, 22-lower handle cover, 221-cylindrical hole inside the lower handle cover used for fixing the rotating shaft of the gripping handle, 222-cylindrical hole inside the lower handle cover used for fixing rotating shaft I, 223-cylindrical hole inside the lower handle cover used for fixing rotating shaft II, 224-cylindrical hole inside the lower handle cover used for fixing rotating shaft III, 225-curved boss, 226-pressing panel of the power generator, 3-control circuit board, 31-high-voltage capacitor, 32-indicator, 4-discharge button switch, 41-button, 42-spring, 43-fixing panel of the button, 44-discharge metal piece, 5-mechanical power generating device, 51-gripping handle, 511-curved rack, 512-hole of rotating shaft of gripping handle, 513-groove, 514-rotating shaft of gripping handle, 52-double gear I, 521-rotating shaft I, 53-gear II, 531-pawl on gear II, 532-rotating shaft II, 54-gear III, 541-ratchet on gear III, 55-double gear IV, 551-rotating shaft III, 56-output gear V, 57-power generator.

### Detailed Description of the Invention

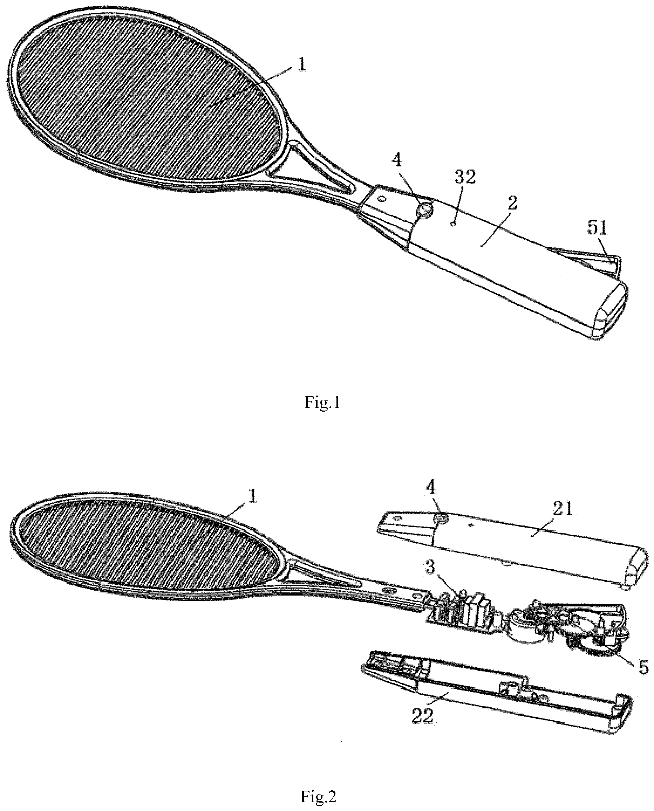

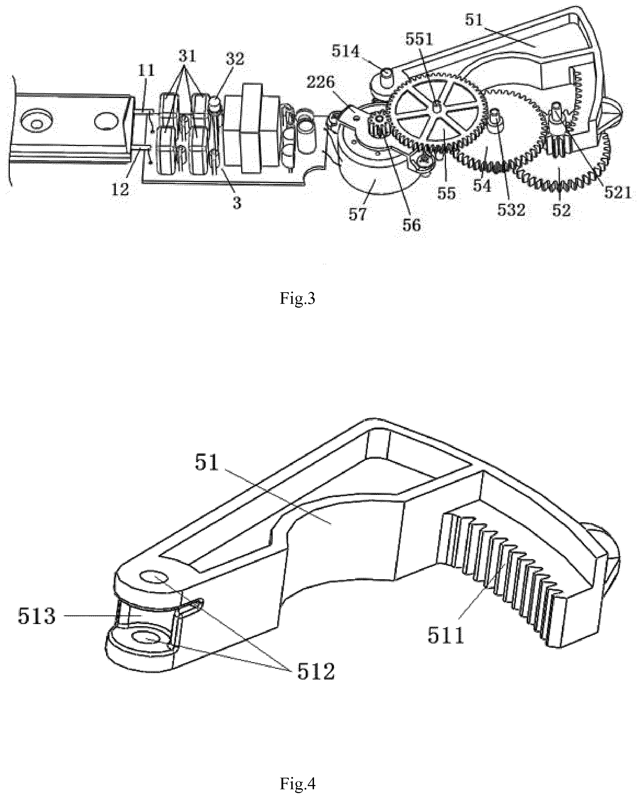

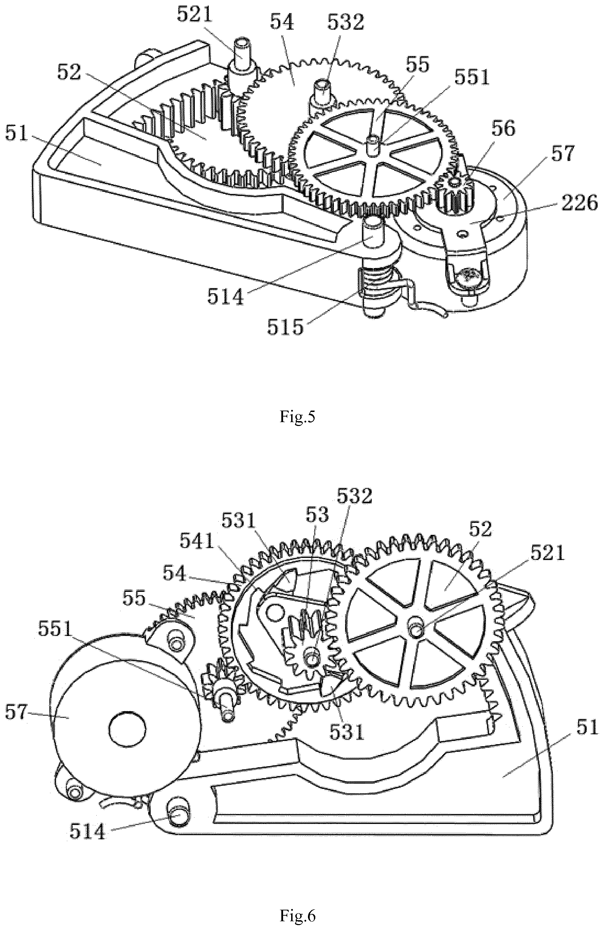

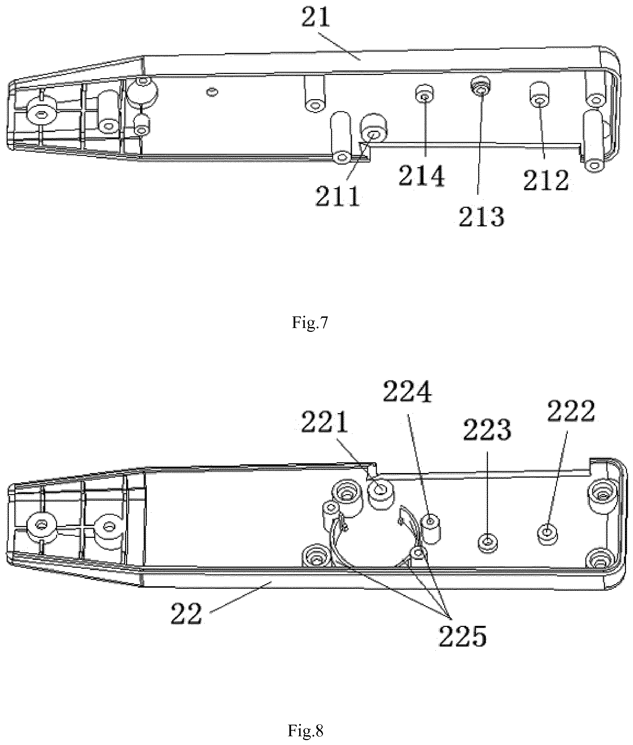

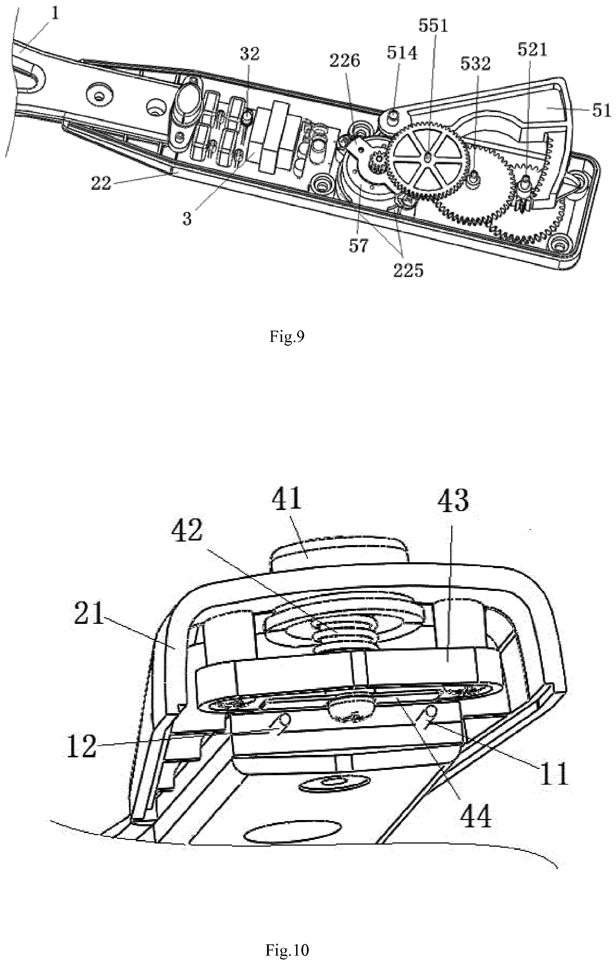

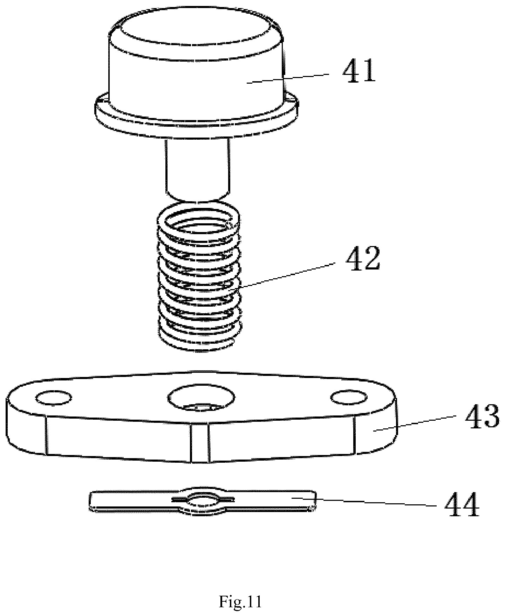

As shown in FIG. 1-11, an electric mosquito swatter without a battery, comprises a face 1, a handle 2, a control circuit board 3 and a mechanical power generating device 5, wherein the face 1 which is composed of a frame and a web is connected to the handle 2, the control circuit board 3 with a high-voltage capacitor 31 and the mechanical power generating device 5 are provided in the handle 2, the web and the mechanical power generating device 5 are both electrically connected with the control circuit board 3; the mechanical power generating device 5 comprises a gripping handle 51, a gear shifting mechanism and a power generator 57, wherein the gripping handle 51 is provided with a curved rack 511 which is engaged with the input gear of the gear shifting mechanism, and the output gear of the gear shifting mechanism drives the rotating shaft of the rotor of the generator 57 to rotate, wherein the generator 57 is electrically connected with the control circuit board 3. When a person presses the gripping handle 51 in a mechanical power generating device 5, the generator 57 in the mechanical power generating device 5 rotates at a high speed to supply power to the control circuit board 3, and the control circuit board 3 converts the low-voltage power into high-voltage power and stores the electric charge in a high-voltage capacitor 31, with both ends of the high-voltage capacitor 31 respectively connected to the positive and negative electrodes of the face 1, so that the face can be used to kill the mosquitoes.

In this embodiment, the gear shifting mechanism is composed of double gear I 52, gear II 53, gear III 54, double gear IV 55 and output gear V 56, which are sequentially connected for transmission; the double gear I 52 and the double gear IV 55 both comprise a small gear and a large gear, wherein the small gear of double gear I 52, which is used as an input gear and engaged with the curved rack 511 on the gripping handle 51, the large gear of double gear I 52 is engaged with gear II 53 for transmission, the gear II 53 and the gear III 54, which are coaxial and connected by a ratchet pawl one-way transmission, the small gear of double gear IV 55 is engaged with the gear III 54 for transmission, the large gear of double gear IV 55 is engaged with the output gear V 56 for transmission, wherein the output gear V 56 is fixed on the rotating shaft of the rotor of the generator 57.

In this embodiment, the handle 2 comprises an upper handle cover 21 and a lower handle cover 22 which are mutually engaged, with one end of the gripping handle 51 hinged with the handle 2 via a rotating shaft 514 of the gripping handle, wherein the handle 2 is provided with rotating shaft I 521, rotating shaft II 532 and rotating shaft III 551, the double gear I 52 is provided on rotating shaft I 521, the gear II 53 and the gear III 54 are provided on rotating shaft II 532, the double gear IV 55 is provided on rotating shaft III 551, and the inner sides of the upper handle cover 21 and the lower handle cover 22 are provided with cylindrical holes used for fixing the rotating shaft 514 of the gripping handle, rotating shaft I 521, rotating shaft II 532 and rotating shaft III 551. Except for the output gear V 56, the rotating shafts of other gears of the gear shifting mechanism and the rotating shaft of the gripping handle are fixed in the cylindrical holes inside the upper handle cover 21 and the lower handle cover 22, so that it is not necessary to design a separate casing for the shifting mechanism, which saves both the costs and the space.

In this embodiment, the gripping handle 51 is mounted with a groove 513 where at the end of the rotating shaft 514 of the gripping handle; the groove 513 is provided with a torsion spring which is aimed to reset the gripping handle 51. When a person presses the gripping handle 51, the curved rack 511 on the handle 51 drives the small gear (input gear) of double gear I 52 to rotate, the large gear of double gear I 52 drives the gear II 53 to rotate, the gear II 53 drives the gear III 54 to rotate via a ratchet pawl, the gear III 54 drives the small gear of double gear IV 55 to rotate, the large gear of double gear IV 55 drives the output gear V 56 to rotate, the output gear V 56 drives the rotor of the generator 57 to rotate, and the generator 57 supplies power to the control circuit board 3, so that at this time, because of the resistance of cutting a magnetic line by the rotor of the generator 57, people feel resistance when pressing the handle 51. When a person loosens the gripping handle 51, the torsion spring resets the gripping handle 51, and the curved rack 511 on the handle 51 drives the small gear (input gear) of the double gear I 52 to rotate in an opposite direction, and the large gear of double gear I 52 drives the gear II 53 to rotate in an opposite direction; via the one-way action of the ratchet pawl, the gear III 54 does not rotate, so that the gripping handle 51 is lightly reset and can be easily reset by the torsion spring.

In this embodiment, in order to accurately fix the position of the power generator 57, an inner side of the lower handle cover 22 is provided with a curved boss 225 which is used for mounting the power generator 57, and the upper portion of the power generator 57 is provided with pressing panel 226 of the power generator, with the pressing panel 226 of the power generator connected with the lower handle cover 22 via a bolt.

In this embodiment, the mechanical power of the gripping handle 51 generated by pressing is used to supply power to the circuit board within a relatively short period, so even if the pressing is performed several times, the power supply is intermittent; but the high-voltage capacitor 31 on the circuit board can store the charge for a long time, so as long as the gripping handle 51 is pressed once or twice, the stored charge in the high-voltage capacitor 31 is sufficient to kill the mosquito, and the charge stored in the high-voltage capacitor 31 does not exceed the international safety standard of 45µC; different from the prior art, two ends of the high-voltage capacitor 31 do not need to be connected to a discharge resistor, or the prior art discharge resistor can be changed from several tens of mega ohms to several hundred mega ohms; therefore, for further safety consideration, the handle 2 is provided with a discharge button switch 4, which is short-circuited by the leads of the positive and negative electrodes, so that when a person presses the discharge button switch 4, the charge stored in the high-voltage capacitor 31 can be discharged via the discharge button switch 4.

In this embodiment, the discharge button switch 4 which is composed of a button 41, a spring 42, a fixing panel of the button 43 and a discharge metal piece 44 is mounted on the upper handle cover 21, wherein a lower portion of the button 41 is provided with a cylinder, wherein the fixing panel of the button 43 which is provided with a through hole to facilitate the cylinder passing through, is fixed in the upper handle cover 21, the spring 42 is sleeved on the cylinder and located between the button 41 and the fixing panel of the button 43, and the discharge metal piece 44 is fixed at the bottom of the cylinder at the lower portion of the button 41; when the discharge button switch 4 is pressed, the discharge metal piece 44 of the discharge button shortens the leads of the positive and the negative electrodes of the face 1 so that the charge stored in the high voltage capacitor 31 is released, and the upper handle cover 2 is mounted with the discharge button switch 4 as a component, so that the discharge button switch 4 does not need to be connected to any lead, which is very convenient during the process of the overall assembly.

In this embodiment, the number of teeth of the small gear of the double gear I 52 is 10 and the number of teeth of the large gear of the double gear I is 40 (modulus (m)=0.7), the number of teeth of the gear II 53 is 11 (m=0.7), the number of teeth of the gear III 54 is 47 (m=0.6), the number of teeth of the small gear of the double gear IV 55 is 10 (m=0.6), the number of teeth of the large gear of the double gear IV is 56 (m=0.5), and the number of teeth of the output gear V 56 is 11 (m=0.5); the gear shifting mechanism has a shifting ratio of 87 times.

The above description is only a preferred embodiment of the present invention, and all the equivalent changes and modifications made according to the scope of the patent application of the present invention are all covered by the present invention..

## Claims

1. An electric mosquito swatter without a battery, **characterized in that**, comprising a face, a handle, a control circuit board and a mechanical power generating device, wherein the face which is composed of a frame and a web is connected to the handle, the control circuit board with a high-voltage capacitor and the mechanical power generating device are provided in the handle, the web and the mechanical power generating device are both electrically connected with the control circuit board; the mechanical power generating device comprises a gripping handle, a gear shifting mechanism and a power generator, wherein the gripping handle is provided with a curved rack which is engaged with the input gear of the gear shifting mechanism, and the output gear of the gear shifting mechanism drives the rotating shaft of the rotor of the generator to rotate, wherein the generator is electrically connected with the control circuit board.

2. The electric mosquito swatter without a battery as claimed in Claim 1, **characterized in that**, the gear shifting mechanism is composed of double gear I, gear II, gear III, double gear IV and output gear V ,which are sequentially connected for transmission; the double gear I and the double gear IV both comprise a small gear and a large gear, wherein the small gear of double gear I, which is used as an input gear and engaged with the curved rack on the gripping handle, the large gear of double gear I is engaged with gear II for transmission, the gear II and the gear III, which are coaxial and connected by a ratchet pawl one-way transmission, the small gear of double gear IV is engaged with gear III for transmission, the large gear of double gear IV is engaged with the output gear V for transmission, wherein the output gear V is fixed on the rotating shaft of the rotor of the generator.

3. The electric mosquito swatter without a battery as claimed in Claim 1, **characterized in that** the handle comprises an upper handle cover and a lower handle cover which are mutually engaged, with one end of the gripping handle hinged with the handle via a rotating shaft of the gripping handle, wherein the handle is provided with rotating shaft I, rotating shaft II and rotating shaft III, the double gear I is provided on rotating shaft I, the gear II and the gear III are provided on rotating shaft II, the double gear IV is provided on rotating shaft III, and the inner sides of the upper handle cover and the lower handle cover are provided with cylindrical holes used for fixing the rotating shaft of the gripping handle, rotating shaft I, rotating shaft II and rotating shaft III.

4. The electric mosquito swatter without a battery as claimed in Claim 3, **characterized in that** an inner side of the lower handle cover is provided with a curved boss which is used for mounting the power generator, and the upper portion of the power generator is provided with pressing panel of the power generator, with the pressing panel of the power generator connected with the lower handle cover via a bolt.

5. The electric mosquito swatter without a battery as claimed in Claim 3, **characterized in that** the handle is provided with a discharge button switch which is used for shortening the leads of the positive and negative electrodes of the web.

6. The electric mosquito swatter without a battery as claimed in Claim 5, **characterized in that** the discharge button switch which is composed of a button, a spring, a fixing panel of the button and a discharge metal piece is mounted on the upper handle cover, wherein a lower portion of the button is provided with a cylinder, wherein the fixing panel of the button which is provided with a through hole to facilitate the cylinder passing through, is fixed in the upper handle cover, the spring is sleeved on the cylinder and located between the button and the fixing panel of the button, and the discharge metal piece is fixed at the bottom of the cylinder.

7. The electric mosquito swatter without a battery as claimed in Claim 2, **characterized in that** the number of teeth of the small gear of double gear I is 10 and the number of teeth of the large gear of the double gear I is 40 (modulus (m)=0.7), the number of teeth of the gear II is 11 (m=0.7), the number of teeth of the gear III is 47 (m=0.6), the number of teeth of the small gear of the double gear IV is 10 (m=0.6), the number of teeth of the large gear of the double gear IV is 56 (m=0.5), and the number of teeth of the output gear V is 11 (m=0.5); the gear shifting mechanism has a shifting ratio of 87 times.

8. The electric mosquito swatter without a battery as claimed in Claim 3, **characterized in that** the end of the gripping handle which is provided with the rotating shaft of the gripping handle is opened with a groove where a torsion spring is provided.
